Europäisches Patentamt

European Patent Office

Office européen des brevets

(19)

(11) **EP 1 536 587 A1**

(12) **EUROPEAN PATENT APPLICATION**

(43) Date of publication:
**01.06.2005 Bulletin 2005/22**

(51) Int Cl.⁷: **H04L 1/08**, H04L 1/00

(21) Application number: **05001135.2**

(22) Date of filing: **23.03.2000**

(84) Designated Contracting States:
**AT BE CH CY DE DK ES FI FR GB GR IE IT LI LU MC NL PT SE**

(30) Priority: **31.03.1999 JP 9207899**

(62) Document number(s) of the earlier application(s) in accordance with Art. 76 EPC:
**00911290.5 / 1 083 662**

(71) Applicant: **MATSUSHITA ELECTRIC INDUSTRIAL CO., LTD.**
**Kadoma-shi, Osaka 571-8501 (JP)**

(72) Inventor: **Kajita, Kuniyuki**
**Yokosuka-shi, Kanagawa 239-0847 (JP)**

(74) Representative: **Grünecker, Kinkeldey, Stockmair & Schwanhäusser Anwaltssozietät**
**Maximilianstrasse 58**
**80538 München (DE)**

Remarks:
This application was filed on 20-01-2005 as a divisional application to the application mentioned under INID code 62.

(54) **Radio communication apparatus and coding processing method**

(57) In a coding processing apparatus, a first repetition section increases the number of bits of data about roughly half the number of bits among the number of bits increased by a repetition. An interleaving section performs rearrangement of data whose the number of bits is increased. A second repetition section increases the number of bits of rearranged data about remaining the number of bits increased by the repetition.

FIG.3A

EP 1 536 587 A1

**(Cont. next page)**

EP 1 536 587 A1

RECEPTION
ANTENNA
116

110 DECODING PROCESSING APPARATUS

| 111 | 112 | 113 | 114 | 115 |
|---|---|---|---|---|
| FIRST PUNCTURING SECTION | DEINTER-LEAVING SECTION | SECOND PUNCTURING SECTION | ERROR CORRECTION DECODER | DECODER |

117
RECEIVED
DATA

FIG.3B

2

## Description

Technical Field

The present invention relates to a radio communication apparatus and a coding processing method employed in mobile radio communication.

Background Art

In mobile radio communication, particularly in CDMA radio communication, Rate matching processing is performed in order to enhance an effect of error correction, and/or in order to transmit data such as a packet, ISDN and so forth while coupling the data. The Rate matching processing is repetition processing for increasing the number of bits of data in order to adjust coded data to frame length, or puncturing processing for reducing the number of bits of data in order to adjust coded data to frame length. For instance, in a transmitter side, in the case where the transmitter side causes the number of bits of data to be increased, in a receiver side, the receiver side is required to perform processing of decreasing of the number of bits of data. In this case, since the transmitter side performs repetition, it is possible to increase a transmission power.

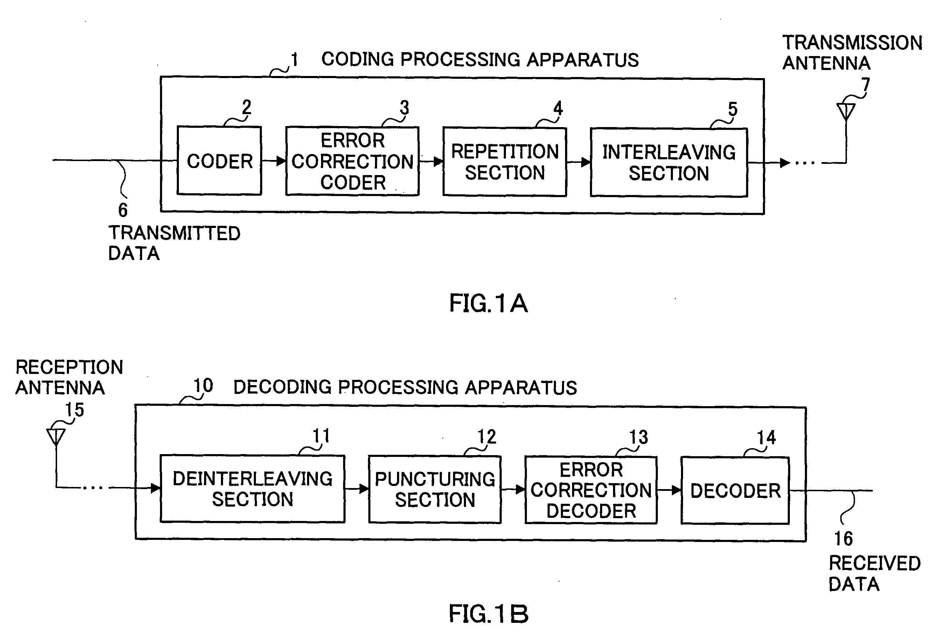

FIG. 1A is a block diagram illustrating a configuration of a conventional coding processing apparatus in the case where repetition is performed in a transmitter side. Also, FIG. 1B is a block diagram illustrating a configuration of a conventional decoding processing apparatus in the case where repetition is performed in a transmitter side.

The coding processing apparatus 1 includes a coder 2, an error correction coder 3, a repetition section 3, and an interleaving section 5. The decoding processing apparatus 10 includes a deinterleaving section 11, a puncturing section 12, an error correction decoder 13, and a decoder 14.

In the transmitter side, transmitted data 6 is coded in the coder 2. This coded data is subjected to error correction coding processing such as convolutional coding and so forth in the error correction coder 3 before the number of bits is increased in the repetition section 4. The data after repetition is rearranged in the interleaving section 5. Subsequently, the data is subjected to predetermined modulation processing and radio processing and so forth, before being transmitted from a transmission antenna 7.

On the other hand, in the receiver side, a signal received by a reception antenna 15 is subjected to predetermined radio processing and demodulation processing and so forth before inverse rearrangement against the interleaving is performed in the deinterleaving section 11. In this rearranged data, the number of bits which are increased in the transmitter side once are decreased in the puncturing section 12. The data is subjected to error correction by viterbi decoding and so forth in the error correction decoder 13. This data after error correcting is decoded in the decoder 14. According to the above processing, received data 16 is obtained.

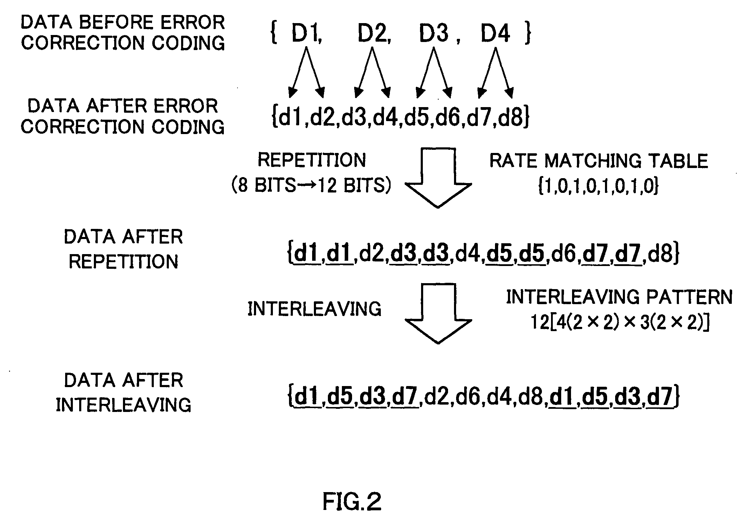

FIG. 2 is a view showing data arrangement in the case where repetition is performed with the conventional coding processing apparatus employed. Now, data outputted from the coder 2 is taken to be {D1, D2, D3, D4}. The data is subjected to error correction coding processing with "code rate = 1/2" in the error correction coder 3. As a result, in cases where D1 becomes d1 and d2, D2 becomes d3 and d4, D3 becomes d5 and d6, and D4 becomes d7 and d8, data inputted to the repetition section 4 becomes data of 8 bits of {d1, d2, d3, d4, d5, d6, d7, d8}. Further, the number of bits per 1 frame is set to 12 bits.

The repetition section 4 is provided with a Rate matching table. Further, a pattern of "0 and 1" is stored in the Rate matching table. The pattern of "0 and 1" causes a distribution of increase of bits within a frame to be even. Now, if the Rate matching table is taken to be {1, 0, 1, 0, 1, 0, 1, 0}, since bits corresponding to "1" are increased, thus d1, d3, d5, and d7 showed by under lines are increased.

Accordingly, data after repetition becomes {d1, d1, d2, d3, d3, d4, d5, d5, d6, d7, d7, d8}. Careful observation of the data after repetition reveals that there exist two increased bits and one not increased bit within continuous three bits, thus it is found that a distribution of increase of bits becomes even within a frame.

The data after repetition is subjected to interleaving in accordance with for instance an interleaving pattern ; 12[4[2×2]×3[2×2]]. According to this processing, the data after interleaving becomes {d1, d5, d3, d7, d2, d6, d4, d8, d1, d5, d3, d7}. According to these processing, it is possible to avoid a burst error in a propagation path in some degrees. Accordingly, it is possible to improve bit error rate characteristic in some degrees when the receiver side corrects errors.

However, in the above-described conventional coding processing apparatus, the increased bits caused by repetition are partial to a position within a frame according to an interleaving pattern. For this reason, an effect of the repetition deteriorates remarkably. Consequently, the bit error rate characteristic deteriorates when the receiver side corrects errors.

Specifically, for instance, in an interleaving pattern showed in FIG. 2, increased bits "d1, d3, d5, d7" are partial to both sides within the frame. Accordingly, in the case where a burst error occurs in a propagation path at portions with not-increased bits "d2, d4, d6, d8", the bit error rate characteristic deteriorates when the receiver side corrects errors.

Disclosure of Invention

An object of the present invention is to provide a radio communication apparatus and a coding processing method in which resistibility to a burst error in a propagation path is high, and the apparatus and method are capable of scheming improvement of communication quality.

The inventor of the present invention notes a cause why the increased bits due to the repetition are partial to a portion within a frame. In the case where the repetition is performed at a time about the whole data before interleaving, the increased bits due to the repetition are partial to a portion within the frame. The inventor finds that the repetition is separated to be performed before and after interleaving in well-balanced condition, so that it is possible to prevent maldistribution of the increased bits due to the repetition within the frame, and the inventor achieves the present invention.

Accordingly, in order to achieve the above-described object, in the present invention, roughly half the number of bits increased due to the repetition are increased in accordance with a repetition before interleaving, while remaining the number of bits increased due to the repetition are increased in accordance with a repetition after interleaving.

Brief Description of Drawings

FIG. 1A is a block diagram illustrating a configuration of a conventional coding processing apparatus;
FIG. 1B is a block diagram illustrating a configuration of a conventional decoding processing apparatus;
FIG. 2 is a view showing data arrangement in the case where repetition is performed with the conventional coding processing apparatus employed;
FIG. 3A is a block diagram illustrating a configuration of a coding processing apparatus according to an embodiment 1 of the present invention;
FIG. 3B is a block diagram illustrating a configuration of a decoding processing apparatus according to an embodiment 1 of the present invention;
FIG. 4 is a block diagram illustrating a configuration of a repetition section and a puncturing section according to the embodiment 1 of the present invention;
FIG. 5 is a flowchart for explaining operation of a first repetition section according to the embodiment 1 of the present invention;
Fig. 6 is a flowchart for explaining operation of a second repetition section according to the embodiment 1 of the present invention;
FIG. 7 is a flowchart for explaining operation of a first puncturing section according to the embodiment 1 of the present invention;
FIG. 8 is a flowchart for explaining operation of a second puncturing section according to the embodiment 1 of the present invention;
FIG. 9 is a view showing data arrangement in the case where repetition is performed with the coding processing apparatus employed according to the embodiment 1 of the present invention;
FIG. 10A is a block diagram illustrating a configuration of a coding processing apparatus according to an embodiment 2 of the present invention;
FIG. 10B is a block diagram illustrating a configuration of a decoding processing apparatus according to the embodiment 2 of the present invention;
FIG. 11A is a block diagram illustrating a configuration of a coding processing apparatus according to an embodiment 3 of the present invention; and
FIG. 11B is a block diagram illustrating a configuration of a decoding processing apparatus according to the embodiment 3 of the present invention.

Best Mode for Carrying Out the Invention

Embodiments of the present invention are explained in detail below with reference to accompanying drawings.

(Embodiment 1)

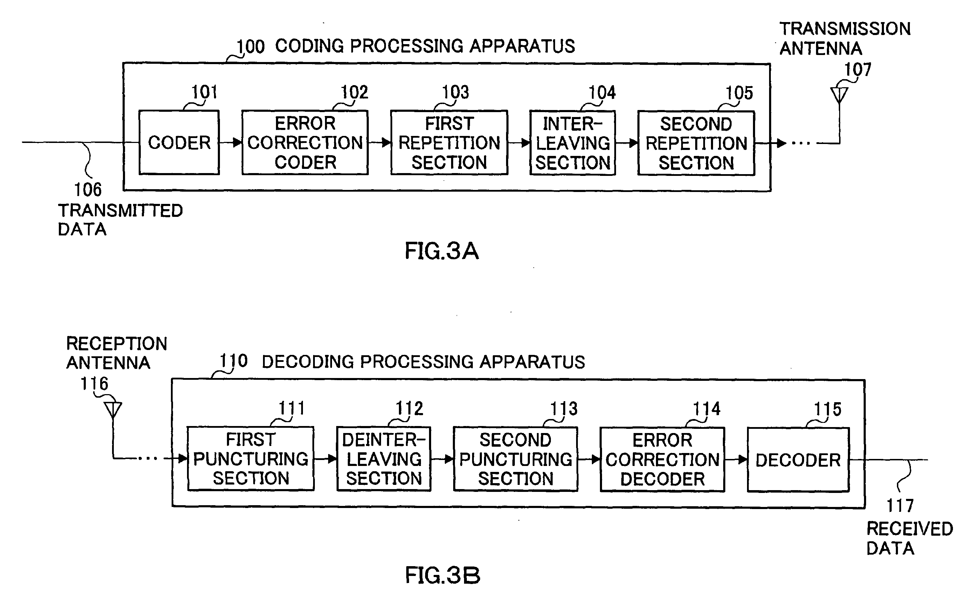

FIG. 3A is a block diagram illustrating a configuration of a coding processing apparatus according to the embodiment 1 of the present invention. Further, FIG. 3B is a block diagram illustrating a configuration of a decoding processing apparatus according to the embodiment 1 of the present invention. A coding processing apparatus 100 includes a coder 101, an error correction coder 102, a first repetition section 103, an interleaving section 104, and a second repetition section 105. In the meantime, a decoding processing apparatus 110 includes a first puncturing section 111, a deinterleaving section 112, a second puncturing section 113, an error correction decoder 114, and a decoder 115.

In the transmitter side, transmitted data 106 is coded in the coder 101. The coded data is subjected to error correction coding processing such as convolutional coding and so forth in the error correction coder 102, before being outputted to the first repetition section 103. The data after error correction coding processing is subjected to a first repetition as describe later in the first repetition section 103. The data after the first repetition is rearranged in the interleaving section 104, before being subjected to a second repetition as describe later in the second repetition section 105. The data after the second repetition is subjected to predetermined modulation processing and predetermined radio processing and so forth thereafter. Then the data is transmitted from a transmission antenna 107.

On the other hand, in the receiver side, a signal received by a reception antenna 116 is subjected to predetermined radio processing and predetermined demodulation processing and so forth. The data after predetermined radio processing and predetermined demodulation processing is subjected to a first puncturing which is inverse processing against the second repetition in the first puncturing section 111. The data after the first puncturing is subjected to an inverse rearrangement against the interleaving in the transmitter side in the deinterleaving section 112. This rearranged data is subjected to a second puncturing which is inverse processing against the first repetition in the second puncturing section 113. The data after the second puncturing is subjected to error correction by Viterbi decoding and so forth in the error correction decoder 114, before being decoded in the decoder 115. According to the above processing, received data 117 is obtained.

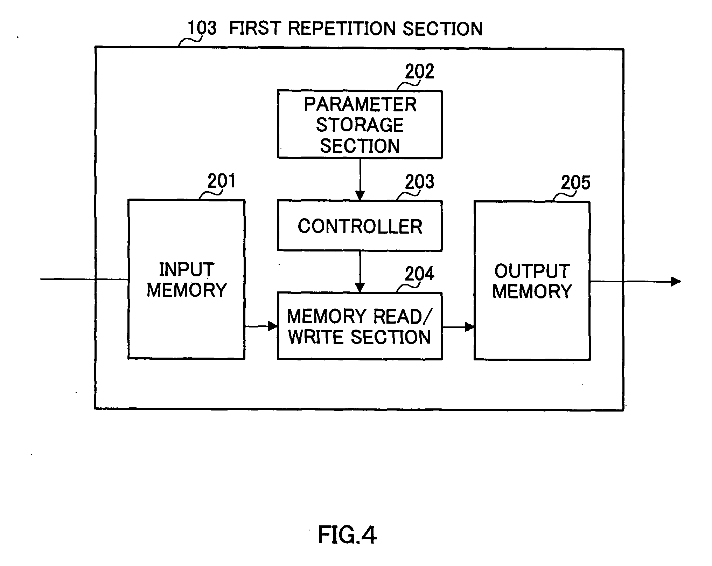

Next, there will be described about configuration of the first repetition section 103 while employing the block diagram illustrated in FIG. 4. In the first repetition section 103, an input memory 201 temporary stores therein data being subjected to error correction coding. A parameter storage section 202 stores therein various kinds of parameters necessary for performing repetition. A controller 203 outputs a control signal for performing read/write of data to a memory read/write section 204 on the basis of various kinds of parameters stored in the parameter storage section 202. The memory read/write section 204 reads the data from the input memory 201 successively, and outputs the data while increasing the number of bits to be targeted bits to an output memory 205 on the basis of the control signal. The output memory 205 stores the data outputted successively from the memory read/write section 204 up to the state where the data for one frame is completed. Then the output memory 205 outputs the data for one frame at the time when the data for one frame is completed.

Further, a configuration of the second repetition section 105 is roughly the same as that of the first repetition section 103. Accordingly, concerning the second repetition section 105, an explanation about the configuration is omitted. There will be explained about only operation in an operation explanation describe later. Furthermore, also configurations of the first puncturing section 111 as well as the second puncturing section 113 are roughly the same as the configuration of the first repetition section 103. Accordingly, about the first puncturing section 111 as well as the second puncturing section 113, an explanation about the configuration is omitted. There will be explained about only operation in an operation explanation as describe later.

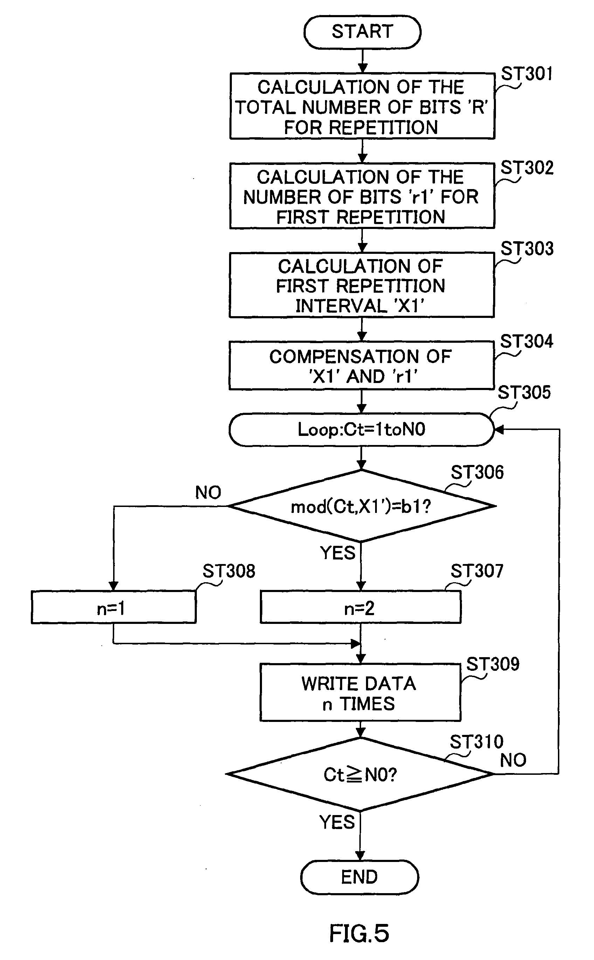

Next, there will be explained about operation of the first repetition section 103. FIG. 5 is a flowchart for explaining operation of the first repetition section 103. Firstly, in ST301, the controller 203 calculates increased the number of bits namely the total number of bits 'R' for repetition in accordance with an expression (1) from the number of bits 'N' per one frame stored in the parameter storage section 202 and the number of bits 'N0' before repetition.

$$R = N - N0 \quad (1)$$

Next, in ST302, the controller 203 calculates the number of bits 'r1' for the first repetition. In order to perform repetition to the data while separating repetition into two stages in well-balanced condition, 'r1' is calculated in such a way of showing of an expression (2) with 'R' employed.

$$r1 = R/2 \text{ (rounding off less than a decimal}$$
$$\text{point)} \quad (2)$$

Next, in ST303, the controller 203 calculates a first repetition interval 'X1' that means whether the controller 203 performs the first repetition in every how many bits in accordance with an expression (3).

$$X1 = N0/r1 \text{ (rounding off less than a decimal}$$
$$\text{point)} \quad (3)$$

Next, in ST304, the controller 203 performs compensation of 'r1' , and 'X1' . This compensation is one causing the first repetition to be executed in accordance with a code rate to be performed according to expressions (4) to (6). Specifically, for instance, in the case where a code rate of data is 1/2, the first repetition is performed in every the number of bits to be multiples of 2, while in the case where a code rate of data is 1/3, the first repetition is performed in every the number of bits to be multiples of 3. Thus 'r1' and 'X1' are compensated in accordance with above described manner.

Firstly, the controller 203 performs the remainder calculation showed in an expression (4).

$$\text{mod}(X1 + m, C) = 0 \ m \geqq 0 \quad (4)$$

Here, 'C' is an inverse number of a code rate of data, and this expression (4) is one for calculating the minimum 'm' causing the remainder to be '0' (zero) when 'X1 + m' is divided by 'C' . The controller 203 calculates a compensated value X1' ' of 'X1' in accordance with an expression (5) while employing 'm' calculated by this expression (4). According to this processing, 'X1' is compensated into 'X1' '.

$$X1' = X1 + m \quad (5)$$

Further, the controller 203 calculates compensated value 'r1' ' of 'r1' in accordance with an expression (6) while employing X1' ' calculated by the expression (5). According to this processing, 'r1' is compensated into 'r1' '.

$$r1' = N0/X1' \text{ (rounding off less than decimal}$$

$$\text{point)} \qquad (6)$$

Subsequently, a value of a counter 'Ct' set in the controller 203 is added one by one from '1' (one). Then, processing of ST305 to ST310 is performed repeatedly over 'N0' times up to the state where the value of the counter 'Ct' becomes 'N0'. In ST306, the controller 203 performs the remainder calculation of an expression (7).

$$\text{mod}(Ct, X1') = b1 \qquad (7)$$

Here, 'b1' is a parameter for setting whether the first repetition is started from how many numbers of bits of a frame. The 'b1' is set in the parameter storage section 202 beforehand.

In ST306, in the case where the remainder of the division of dividing 'Ct' by X1'' becomes equal to 'b1', in ST307, the controller 203 sets the number of times 'n' of data output to '2'. in ST306, in the case where the remainder of the division of dividing 'Ct' by X1'' does not become equal to 'b1', in ST308, the controller 203 sets the number of times 'n' of data output to '1'.

In ST309, the memory read/write section 204 reads the data stored in the input memory 201 one bit by one bit to write to the output memory 205 over 'n' times. Namely, concerning the bit set to 'n=2', the number of bits is increased.

According to a processing-flow described-above, the first repetition of causing the number of bits to be increased for only the number of bits 'r1'' roughly half the number of total bits 'R' for the repetition is performed. Concerning the data after the first repetition, rearrangement of data is performed in accordance with the interleaving pattern in the interleaving section 104, subsequently the data is subjected to the second repetition in the second repetition section 105.

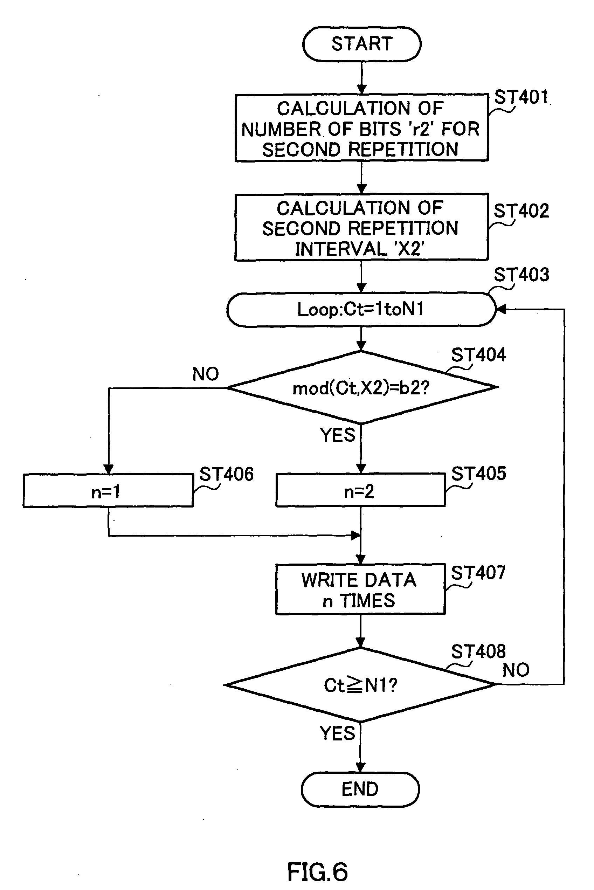

Next, there will be described about operation of the second repetition section 105. FIG. 6 is a flowchart for explaining operation of the second repetition section 105.

Firstly, in ST401, the controller 203 within the second repetition section 105 calculates the number of bits 'r2' for the second repetition in accordance with an expression (8) from the number of total bits 'R' for the repetition calculated by the first repetition section 103 and compensated number of bits 'r1'' for the first repetition.

$$r2 = R - r1' \qquad (8)$$

Next, in ST402, the controller 203 calculates a second repetition interval 'X2' that means whether the controller 203 performs the second repetition in every how many bits in accordance with an expression (9).

$$X2 = N1/r2 \text{ (rounding off less than a decimal}$$

$$\text{point)} \qquad (9)$$

Here, 'N1' is 'N1 = N0 + r1'', which represents the number of bits after the first repetition.

Subsequently, a value of the counter 'Ct' set in the controller 203 is added one by one from '1' (one). Then, processing of ST403 to ST408 is performed repeatedly over 'N1' times up to the state where the value of the counter 'Ct' becomes 'N1'. In ST404, the controller 203 performs the remainder calculation of an expression (10).

$$\text{mod}(Ct, X2) = b2 \qquad (10)$$

Here, 'b2' is a parameter for setting whether the second repetition is started from how many numbers of bits of a frame. This 'b2' is set in the parameter storage section 202 beforehand.

In ST404, in the case where the remainder of the division of dividing 'Ct' by 'X2' becomes equal to 'b2', in ST405, the controller 203 sets the number of times 'n' of data output to '2'. While, in ST404, in the case where the remainder of the division of dividing 'Ct' by 'X2' does not become equal to 'b2', in ST406, the controller 203 sets the number of times n' of data output to '1'.

In ST407, the memory read/write section 204 reads the data stored in the input memory 201 one bit by one bit to write to the output memory 205 over 'n' times. Namely, concerning the bit set to 'n=2', the number of bits is increased.

According to the processing-flow described-above, the second repetition is performed to the data after the first repetition. According to this processing, a repetition satisfying the total number of bits per one frame is performed.

Next, there will be described concerning processing of the receiver side. In the receiver side, the first puncturing section 111 and the second puncturing section 113 perform inverse processing against the transmitter side, namely perform puncturing, to the bits increased by the first repetition and the second repetition in the transmitter side. According to this processing, received data 117 is obtained. Specific operation is as follows.

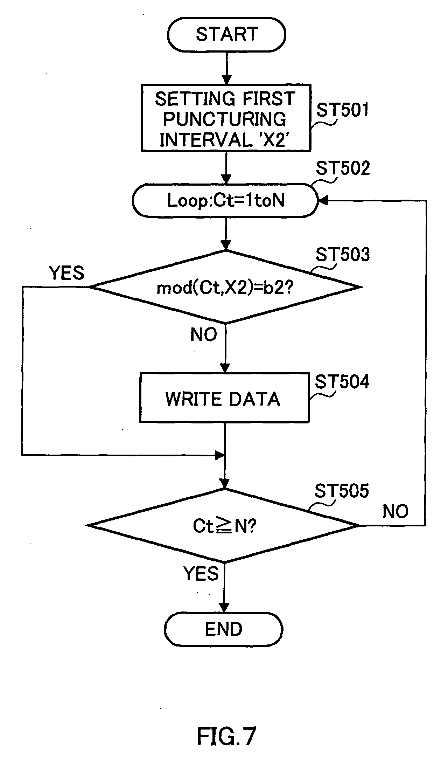

Firstly, there will be described about operation of the first puncturing section 111. FIG. 7 is a flowchart for explaining operation of the first puncturing section 111. The first puncturing section 111 performs processing for decreasing the bits increased in the second repetition section 105.

In ST501, a first puncturing interval 'X2' that means whether the first puncturing is performed in every how many bits is set to the parameter storage section 202 in accordance with control data transmitted from the transmitter side. This 'X2' is equal to the second repetition interval 'X2'.

Subsequently, the processing of ST502 to ST505 is performed repeatedly over 'N' times up to the state where a value of the counter 'Ct' set in the controller 203 is added one by one from '1' (one) to come into 'N'. Here, 'N' is 'N = N0 + r1' + r2', thus representing the number of bits after the second repetition, namely representing the number of bits per one frame. In ST503, the controller 203 performs the remainder calculation of an expression (11).

$$mod(Ct, X2) = b2 \qquad (11)$$

Here, 'b2' is equal to 'b2' which is employed when the second repetition is performed. The 'b2' is set to the parameter storage section 202 in accordance with the above control signal.

Next, in ST504, the memory read/write section 204 reads data stored in the input memory 201 one bit by one bit. Then, in the case where the remainder of the division of dividing 'Ct' by 'X2' does not become equal to 'b2', the memory read/write section 204 writes the read data to the output memory 205 once. While in the case where the remainder of the division of dividing 'Ct' by 'X2' becomes equal to 'b2', the memory read/write section 204 abolishes the read data.

According to the processing-flow described-above, the first puncturing is performed to the bits increased by the second repetition. Concerning the data after the first puncturing, an inverse rearrangement against the rearrangement of data performed in the interleaving section 104 is performed in the deinterleaving section 112. Subsequently, the data is subjected to the second puncturing in the second puncturing section 113.

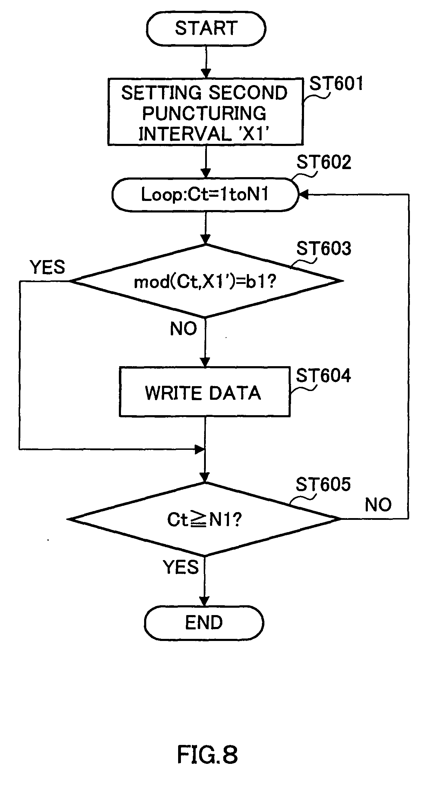

Next, there will be described operation of the second puncturing section 113. FIG. 8 is a flowchart for explaining operation of the second puncturing section 113. The second puncturing section 113 performs processing for decreasing the bits increased by the first repetition section 103.

Firstly, in ST601, a second puncturing interval 'X1' ' that means whether the second puncturing is performed in every how many bits is set to the parameter storage section 202 in accordance with the above control data. This 'X1' ' is equal to the compensated first repetition interval 'X1' '.

Subsequently, the processing of ST602 to ST605 is performed repeatedly over 'N1' times up to the state where a value of the counter 'Ct' set in the controller 203 is added one by one from '1' (one) to come into 'N1'. This 'N1' is equal to 'N1' which is employed in the second repetition to be set to the controller 203 in accordance with the above control signal.

In ST603, the controller 203 performs the remainder calculation of an expression (12).

$$mod(Ct, X1') - b1 \qquad (12)$$

Here, 'b1' is equal to the 'b1' employed when the first repetition is performed, to be set to the parameter storage section 202 in accordance with the above control signal.

Next, in ST604, the memory read/write section 204 reads the data stored in the input memory 201 one bit by one bit. Then in the case where the remainder of the division of dividing 'Ct' by 'X1' ' does not become equal to 'b1', the memory read/write section 204 writes the read data to the output memory 205 once. While in the case where the remainder of the division of dividing 'Ct' by 'X1' ' becomes equal to 'b2', the memory read/write section 204 abolishes the read data.

According to the processing-flow described-above, the second puncturing is performed to the bits increased by the first repetition. The data after the second puncturing is subjected to error correction by Viterbi decoding and so forth in the error correction decoder 114, before being decoded in the decoder 115. According to this processing, received data 117 is obtained.

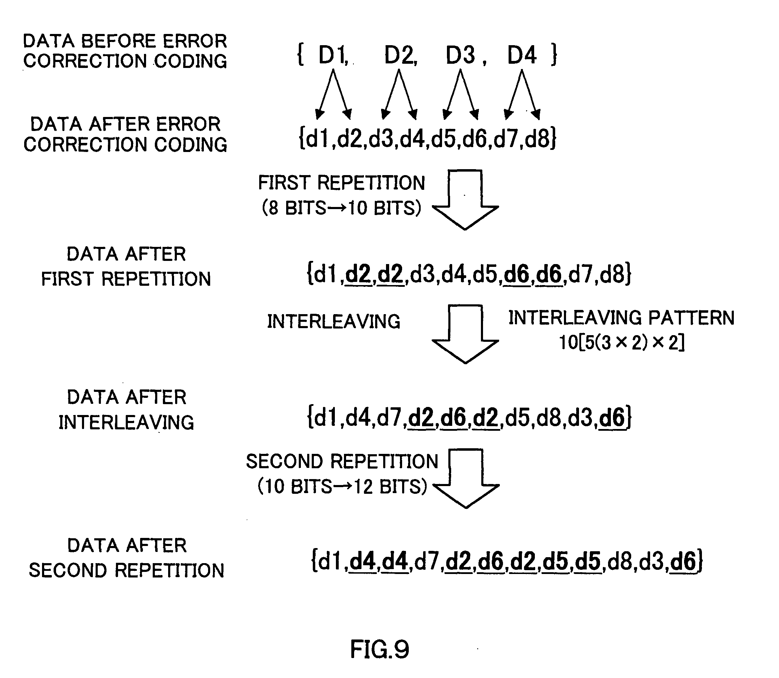

Next, there will described the circumstances in detail in which transmitted data is subjected to repetition and interleaving due to the coding processing apparatus 100 of the present embodiment while employing FIG. 9. Now, data outputted from the coder 101 is taken to be {D1, D2, D3, D4}. The data is subjected to error correction coding processing with "code rate = 1/2" in the error correction coder 102. As a result, in cases where 'D1' becomes 'd1', and 'd2', 'D2' becomes 'd3', and 'd4', 'D3' becomes 'd5', and 'd6', and 'D4' becomes 'd7', and 'd8', data inputted to the first repetition section 103 becomes data of 8 bits of {d1, d2, d3, d4, d5, d6, d7, d8}. Further, the number of bits per one frame is 12 bits.

In the first place, the first repetition section 103 performs the first repetition in accordance with processing-flow of FIG. 5. Firstly, in ST301 to ST303, 'R', 'r1', and 'X1' are calculated in accordance with above expressions (1) to (3). Following result is obtained.

$$R = N - N0 - 12 - 8 - 4 \qquad (13)$$

$$r1 = R/2 = 4/2 = 2 \qquad (14)$$

$$X1 - N0/r1 = 8/2 = 4 \qquad (15)$$

Next, in ST304, 'r1' and 'X1' are compensated in accordance with above expressions (4) to (6). Now, since the code rate of the error correction coding processing is '1/2', 'C' becomes 'C=2'. Consequently, above expression (4) is calculated as following way.

$$mod(X1 + m, C) = 0$$

$$mod(4 + m, 2) = 0$$

$$\therefore m = 0 \qquad (16)$$

Here, since 'm' is 'm=0', following result is obtained in accordance with above expressions (5), and (6).

$$X1' - X1 = 4 \qquad (17)$$

$$r1' = r1 = 2 \qquad (18)$$

Next, in ST305 to ST310, the number of bits of corresponding bits is increased in accordance with the above expression (7) up to the state where 'Ct' becomes 'N0' from '1'. Now, in the case where 'b1' is set to "b1=2", in accordance with the above expression (7), the number of bits of 'd2' to be data of the second bit as well as the number of bits of 'd6' to be data of the sixth bit are increased, thus the first repetition is performed. Consequently, the data after the first repetition becomes {d1, d2, d2, d3, d4, d5, d6, d6, d7, d8} as showed in FIG. 9. Further, the data showed by underline in FIG. 9 are ones whose number of bits is increased due to repetition.

Next, concerning the data after the first repetition, rearrangement of data is performed in accordance with interleaving pattern "10[5[3×2]×2]" in the interleaving section 104. As a result, the data after interleaving becomes {d1, d4, d7, d2, d6, d2, d5, d8, d3, d6}.

Next, the second repetition section 105 performs the second repetition to the data after interleaving in accordance with the processing-flow of FIG. 6. Firstly, in ST401 to ST402, in accordance with the above expressions (8) to (9), 'r2' and 'X2' are calculated as follows:

$$r2 = R - r1' - 4 - 2 = 2 \qquad (19)$$

$$X2 = N1/r2 = 10/2 = 5 \qquad (20)$$

Next, in ST403 to ST408, the number of bits of corresponding bits is increased in accordance with the above expression (10) up to the state where 'Ct' becomes 'N1' from '1'. Now, in the case where 'b2' is set to 'b2=2', in accordance with the above expression (10), the number of bits of 'd4' to be data of the second bit as well as the number of bits of 'd5' to be data of the seventh bit are increased, thus the second repetition is performed. Consequently, the data after the second repetition becomes {d1, d4, d4, d7, d2, d6, d2, d5, d5, d8, d3, d6} as showed in FIG. 9.

Thus, according to the coding processing apparatus and the decoding processing apparatus of the present embodiment, since repetition is performed at two stages before and after interleaving, it is possible to prevent that the bits increased due to repetition exist while being partial to one position within a frame. For that reason, it is possible to improve a bit error rate characteristic when the receiver side performs error correction in comparison with the conventional coding processing apparatus and the conventional decoding processing apparatus in which repetition is performed only once before interleaving.

Further, in the above specific example, in the case where the interleaving pattern is 10[5[3×2]×2], an effect of the present embodiment becomes the most remarkable. However, even though an interleaving pattern is another one, it can be observed that the present embodiment has an effect.

Furthermore, in the above specific example, there is described the embodiment while setting various kinds of parameters arbitrarily. However, it is nothing but one example. Accordingly, the effect of the present embodiment is not observed while being limited from values of these parameters, but the effect of the present embodiment is observed even though parameters adopt another values.

(Embodiment 2)

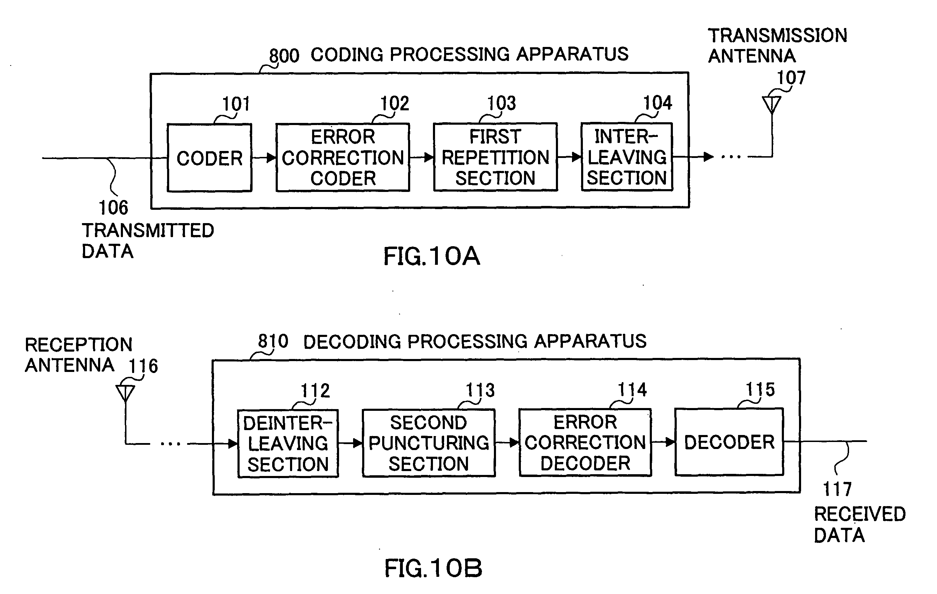

Next, there will be described an embodiment 2 of the present invention. FIG. 10A is a block diagram illustrating a configuration of a coding processing apparatus according to the embodiment 2 of the present invention. Further, FIG. 10B is a block diagram illustrating a configuration of a decoding processing apparatus according to the embodiment 2 of the present invention. In a coding processing apparatus 800, the configuration of the coding processing apparatus 800 is one in which the second repetition section 105 is removed from the coding processing apparatus 100 of the embodiment 1. Another configuration and operation of respective sections are the same as that of coding processing apparatus 100.

Consequently, in a transmitter side, the data which is subjected to the error correction coding processing in the error correction coder 102 is subjected to a first repetition by the first repetition section 103 in which 'r1' calculated in ST302 at the processing-flow showed in FIG. 5 described-above is taken to be 'r1=R'. The data after the first repetition is rearranged in the interleaving section 104. Subsequently, the data is subjected to predetermined modulation processing and predetermined radio processing and so forth, before being transmitted from the transmission antenna 107.

On the other hand, in a decoding processing apparatus 810, the configuration of the decoding processing apparatus 810 is one in which the first puncturing section 111 is removed from the decoding processing apparatus 110 of the embodiment 1. Another configuration and operation of respective sections are the same as that of decoding processing apparatus 110.

Consequently, in the receiver side, data to which inverse rearrangement against the interleaving of the transmitter side is performed in the deinterleaving section 112 is subjected to inverse second puncturing against the first repetition in accordance with the processing-flow showed in FIG. 8 described above by the second puncturing section 113. The data after the second puncturing is subjected to the error correction by Viterbi decoding and so forth in the error correction decoder 114.

Thus, according to the coding processing apparatus and the decoding processing apparatus of the present embodiment, the repetition is performed while determining increased bits in accordance with the code rate such that in the case where the code rate of the data is '1/2' , the increased bits are determined in every the number of bits of multiples of 2, and such that in the case where the code rate of the data is '1/3', the increased bits are determined in every the number of bits of multiples of 3. Consequently, according to the coding processing apparatus and the decoding processing apparatus of the present embodiment, it is possible to prevent that the repetition is performed repeatedly to a plurality of data after error correction coding, which are generated from the same data before error correction coding, caused by error correction coding processing. Thus, according to the coding processing apparatus and the decoding processing apparatus of the present embodiment, since it is possible to enhance an effect of the error correction coding, it is possible to improve a bit error rate characteristic when the receiver side performs error correction in comparison with the conventional coding processing apparatus and the conventional decoding processing apparatus.

(Embodiment 3)

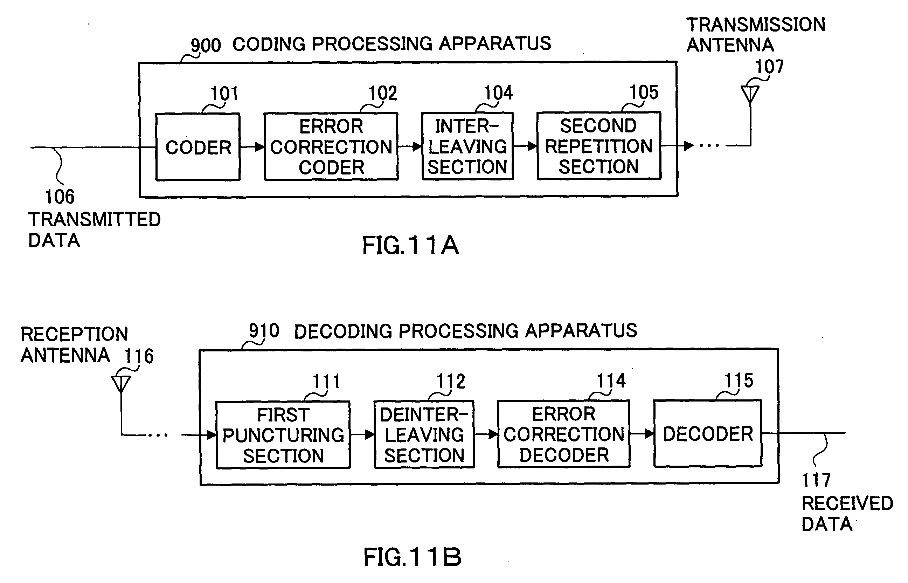

Next, there will be described an embodiment 3 of the present invention. FIG. 11A is a block diagram illustrating a configuration of a coding processing apparatus according to an embodiment 3 of the present invention. Further, FIG. 11B is a block diagram illustrating a configuration of a decoding processing apparatus according to the embodiment 3 of the present invention.

In a coding processing apparatus 900, the configuration of the coding processing apparatus is one in which the first repetition section 103 is removed from the coding processing apparatus 100 of the first embodiment. Another configuration and operation of respective sections are the same as that of the coding processing apparatus 100.

Consequently, in the transmitter side, the data which is rearranged in the interleaving section 104 is subjected to a second repetition by the second repetition section 105 in which 'r2' calculated in ST401 at the processing flow showed in FIG. 6 described-above is taken to be 'r2=R'. The data after the second repetition is subjected to predetermined modulation processing and predetermined radio processing and so forth, before being transmitted from the transmission antenna 107.

On the other hand, in a decoding processing apparatus 910, the configuration is one in which the second puncturing section 113 is removed from the decoding processing apparatus 110 of the embodiment 1. Another configuration and operation of respective sections are the same as that of the decoding-coding processing apparatus 110.

Consequently, in the receiver side, a signal received by the reception antenna 116 is subjected to predetermined radio processing and predetermined demodulation processing and so forth. Subsequently, the received signal is subjected to a first puncturing which is inverse processing against the second repetition in accordance with the processing- flow showed in FIG. 7 described-above by the first puncturing section 111. Concerning the data after the first puncturing, inverse rearrangement against the interleaving of the transmitter side is performed in the deinterleaving section 112.

Thus, according to the coding processing apparatus and the decoding processing apparatus of the present embodiment, since the repetition is performed after interleaving, it is possible to prevent that the bits increased due to repetition exist while being partial to one position within a frame. Consequently, according to the coding processing apparatus and the decoding processing apparatus of the present embodiment, it is possible to improve a bit error rate characteristic when the receiver side performs error correction in comparison with the conventional coding processing apparatus and the conventional decoding processing apparatus in which repetition is performed before interleaving.

The coding processing apparatus and the decoding processing apparatus according to the embodiments 1 to 3 described-above are applicable to a base station apparatus employed in a radio communication system, and applicable to a communication terminal apparatus such as a mobile station for performing radio communication to this base station apparatus. In the case of application, since the base station apparatus and the communication terminal apparatus are mounted with the coding processing apparatus and the decoding processing apparatus, which can lower the bit error rate, it is possible to scheme improvement of communication quality.

Further, in the explanation of the above embodiments 1 to 3, for the sake of convenience, there is explained the embodiments while separating the apparatus of the present invention into the transmitter and the receiver. However, a radio communication apparatus in a CDMA radio communication system also can be provided with both of the transmitter and the receiver.

As described-above, according to the present invention, it is possible to scheme improvement of communication quality because resistibility to a burst error in a propagation path becomes high.

This application is based on the Japanese Patent Application No.HEI11-092078 filed on March 31, 1999, entire content of which is expressly incorporated by reference herein.

Industrial Applicability

The present invention is applicable to a base station apparatus employed in a radio communication system and/or a communication terminal apparatus such as a mobile station performing radio communication between the base station apparatus and the mobile station.

**Claims**

1. A radio transmission apparatus comprising:

    an interleaver (104) for interleaving input data including a plurality of bits, and

    a rate matcher comprising a repeater (103) and a puncturing means (111), wherein the rate matcher is adapted to perform rate-matching the interleaved input data by alternatively selecting between

        (i) employing said repeater (103) for repeating a part of the plurality of bits interleaved by said interleaver and

        (ii) employing said puncturing means (111) for puncturing a part of the plurality of bits interleaved by said interleaver.

2. The radio transmission apparatus according to claim 1, further comprising a coder (102) for performing error correction coding of said input data to provide error correction coded input data, wherein said interleaver (104) is adapted to perform interleaving of the error correction coded input data.

3. The radio transmission apparatus according to claim 1 or 2, wherein the rate matcher is adapted to repeat and to puncture said part of the plurality of bits at regular intervals.

4. The radio transmission apparatus according to one of claims 1 to 3. wherein said rate matcher is adapted to adjust the number of bits of the input data interleaved by said interleaver (104).

5. The radio transmission apparatus according to one of claims 1 to 4, further comprising a transmitter for transmitting the rate matched input data.

6. A radio reception apparatus comprising:

    a receiver for receiving data including a plurality of bits from the radio transmission apparatus,

    a rate matcher comprising a repeater (103) and a puncturing means (111), wherein the rate matcher is adapted to perform rate-matching the received data by alternatively selecting between

        (i) employing said repeater (103) for repeating bits of said received data having been punctured prior to reception by said radio transmission apparatus and

        (ii) employing said puncturing means (111) for puncturing bits of said received data having been repeated prior to reception by said radio transmission apparatus, and

    a de-interleaver (112) for de-interleaving the rate matched received data.

7. A communication terminal apparatus comprising a radio transmission apparatus according to one of claims 1 to 5 or a radio reception apparatus according to claim 6.

8. A base station apparatus comprising a radio transmission apparatus according to one of claims 1 to 5 or a radio reception apparatus according to claim 6.

9. A radio transmission method comprising the steps of:

    interleaving input data including a plurality of bits,

    rate-matching the interleaved input data in a rate matcher comprising a repeater (103) and a puncturing means (111),

    alternatively selecting by the rate matcher between employing said repeater (103) for repeating a part of the plurality of bits of the interleaved input data and employing said puncturing means (111) for puncturing a part of the plurality of bits of the interleaved input data, and

    transmitting the rate matched input data.

10. A radio reception method comprising the steps of:

receiving data including a plurality of bits,

rate-matching the interleaved input data in a rate matcher comprising a repeater (103) and a puncturing means (111),

alternatively selecting by the rate matcher between employing said repeater (103) for employing said repeater (103) for repeating bits of said received data having been punctured prior to reception and employing said puncturing means (111) for puncturing bits of said received data having been repeated prior to reception, and

de-interleaving the rate matched received data.

EP 1 536 587 A1

TRANSMISSION
ANTENNA

1 CODING PROCESSING APPARATUS

| 2 CODER | → | 3 ERROR CORRECTION CODER | → | 4 REPETITION SECTION | → | 5 INTERLEAVING SECTION | → ... |

7

6
TRANSMITTED
DATA

**FIG.1A**

RECEPTION
ANTENNA

15

10 DECODING PROCESSING APPARATUS

... → | 11 DEINTERLEAVING SECTION | → | 12 PUNCTURING SECTION | → | 13 ERROR CORRECTION DECODER | → | 14 DECODER | →

16
RECEIVED
DATA

**FIG.1B**

DATA BEFORE ERROR
CORRECTION CODING

{ D1, D2, D3 , D4 }

DATA AFTER ERROR
CORRECTION CODING

{d1,d2,d3,d4,d5,d6,d7,d8}

REPETITION
(8 BITS→12 BITS)

RATE MATCHING TABLE
{1,0,1,0,1,0,1,0}

DATA AFTER
REPETITION

{d1,d1,d2,d3,d3,d4,d5,d5,d6,d7,d7,d8}

INTERLEAVING

INTERLEAVING PATTERN
12[4(2 × 2) × 3(2 × 2)]

DATA AFTER
INTERLEAVING

{d1,d5,d3,d7,d2,d6,d4,d8,d1,d5,d3,d7}

FIG.2

EP 1 536 587 A1

100 CODING PROCESSING APPARATUS

TRANSMISSION ANTENNA
107

| 101 | 102 | 103 | 104 | 105 |
|-----|-----|-----|-----|-----|
| CODER | ERROR CORRECTION CODER | FIRST REPETITION SECTION | INTER-LEAVING SECTION | SECOND REPETITION SECTION |

106 TRANSMITTED DATA

FIG.3A

RECEPTION ANTENNA
116

110 DECODING PROCESSING APPARATUS

| 111 | 112 | 113 | 114 | 115 |
|-----|-----|-----|-----|-----|
| FIRST PUNCTURING SECTION | DEINTER-LEAVING SECTION | SECOND PUNCTURING SECTION | ERROR CORRECTION DECODER | DECODER |

117 RECEIVED DATA

FIG.3B

103 FIRST REPETITION SECTION

202 PARAMETER STORAGE SECTION

203 CONTROLLER

204 MEMORY READ/ WRITE SECTION

201 INPUT MEMORY

205 OUTPUT MEMORY

FIG.4

FIG.5

16

FIG.6

START

SETTING FIRST
PUNCTURING
INTERVAL 'X2' — ST501

Loop:Ct=1toN — ST502

ST503

mod(Ct,X2)=b2? — YES — NO

WRITE DATA — ST504

ST505

Ct$\geqq$N? — NO — YES

END

FIG.7

START

SETTING SECOND
PUNCTURING
INTERVAL 'X1' — ST601

Loop:Ct=1toN1 — ST602

ST603
mod(Ct,X1')=b1?
YES
NO

WRITE DATA — ST604

ST605
Ct≧N1?
NO
YES

END

FIG.8

DATA BEFORE ERROR
CORRECTION CODING                { D1,   D2,   D3,   D4 }

DATA AFTER ERROR
CORRECTION CODING                {d1,d2,d3,d4,d5,d6,d7,d8}

FIRST REPETITION
(8 BITS→10 BITS)

DATA AFTER
FIRST REPETITION                 {d1,**d2,d2**,d3,d4,d5,**d6,d6**,d7,d8}

INTERLEAVING                     INTERLEAVING PATTERN
                                 10[5(3 × 2) × 2]

DATA AFTER
INTERLEAVING                     {d1,d4,d7,**d2,d6,d2**,d5,d8,d3,**d6**}

SECOND REPETITION
(10 BITS→12 BITS)

DATA AFTER
SECOND REPETITION                {d1,**d4,d4**,d7,**d2,d6,d2,d5,d5**,d8,d3,**d6**}

FIG.9

EP 1 536 587 A1

800 CODING PROCESSING APPARATUS

TRANSMISSION ANTENNA
107

101 CODER

102 ERROR CORRECTION CODER

103 FIRST REPETITION SECTION

104 INTER-LEAVING SECTION

106 TRANSMITTED DATA

FIG.10A

810 DECODING PROCESSING APPARATUS

RECEPTION ANTENNA 116

112 DEINTER-LEAVING SECTION

113 SECOND PUNCTURING SECTION

114 ERROR CORRECTION DECODER

115 DECODER

117 RECEIVED DATA

FIG.10B

900 CODING PROCESSING APPARATUS

TRANSMISSION ANTENNA

107

| 101 | 102 | 104 | 105 |
|---|---|---|---|
| CODER | ERROR CORRECTION CODER | INTER-LEAVING SECTION | SECOND REPETITION SECTION |

...

106
TRANSMITTED DATA

FIG.11A

910 DECODING PROCESSING APPARATUS

RECEPTION ANTENNA 116

| 111 | 112 | 114 | 115 |
|---|---|---|---|
| FIRST PUNCTURING SECTION | DEINTER-LEAVING SECTION | ERROR CORRECTION DECODER | DECODER |

...

117
RECEIVED DATA

FIG.11B

# EP 1 536 587 A1

**European Patent Office**

## EUROPEAN SEARCH REPORT

Application Number

EP 05 00 1135

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | TOSKALA A ET AL: "FRAMES FMA2 WIDEBAND-CDMA FOR UMTS" EUROPEAN TRANSACTIONS ON TELECOMMUNICATIONS, EUREL PUBLICATION, MILANO, IT, vol. 9, no. 4, 1 July 1998 (1998-07-01), pages 325-335, XP000778096 ISSN: 1124-318X | 1-5,7-9 | H04L1/08 H04L1/00 |
| Y | * page 329, right-hand column, paragraph 4.1 - page 330, left-hand column, paragraph 4.3; figure 6 * ----- | 6,10 | |
| X | NIKULA E ET AL: "FRAMES MULTIPLE ACCESS FOR UMTS AND IMT-2000" IEEE PERSONAL COMMUNICATIONS, IEEE COMMUNICATIONS SOCIETY, US, vol. 5, no. 2, April 1998 (1998-04), pages 16-24, XP000751831 ISSN: 1070-9916 * right-hand column, line 3 - line 31; figure 13 * ----- | 1-5,7-9 | |
| Y | WO 99/08425 A (QUALCOMM INCORPORATED) 18 February 1999 (1999-02-18) * page 7, line 1 - line 8 * | 6,10 | TECHNICAL FIELDS SEARCHED (Int.Cl.7) H03M H04L |
| A | * page 7, line 30 - page 8, line 7 * ----- | 1,9 | |
| P,X | WO 99/53628 A (NOKIA TELECOMMUNICATIONS OY; TOSKALA, ANTTI; HOLMA, HARRI; RIKKINEN, K) 21 October 1999 (1999-10-21) * page 3, line 14 - page 4, line 7 * * page 4, line 29 - page 5, line 10 * * page 5, line 11 - page 6, line 8; figures 2,3 * ----- -/-- | 1-10 | |

The present search report has been drawn up for all claims

| Place of search | Date of completion of the search | Examiner |
|---|---|---|
| The Hague | 1 April 2005 | Papantoniou, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

23

**EP 1 536 587 A1**

| European Patent Office | EUROPEAN SEARCH REPORT | Application Number |
|---|---|---|
| | | EP 05 00 1135 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E | EP 1 227 596 A (KONINKLIJKE PHILIPS ELECTRONICS N.V) 31 July 2002 (2002-07-31)<br>* column 2, line 17 - line 54 *<br>* column 4, line 35 - line 50 *<br>* column 7, line 16 - line 49 *<br>----- | 1-5,7-9 | |
| T | "3RD GENERATION PARTNERSHIP PROJECT; TECHNICAL SPECIFICATION GROUP RADIO ACCESS NETWORK; MULTIPLEXING AND CHANNEL CODING (FDD) (3G TS 25.212 VERSION 3.1.0)"<br>3G TS 25.212 V3.1.0, XX, XX, 1999, pages 1-51, XP002232780<br>* page 13, paragraph 4.2.3 *<br>* page 18, paragraph 4.2.5 - page 19 *<br>* page 20, line 4.2.7 *<br>* page 33, paragraph 4.2.7.5 *<br>* page 35, paragraph 5.2.11 - page 36 *<br>----- | 1-5,7-9 | |
| | | | **TECHNICAL FIELDS SEARCHED** (Int.Cl.7) |

The present search report has been drawn up for all claims

| Place of search | Date of completion of the search | Examiner |
|---|---|---|
| The Hague | 1 April 2005 | Papantoniou, A |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

**ANNEX TO THE EUROPEAN SEARCH REPORT
ON EUROPEAN PATENT APPLICATION NO.**

EP 05 00 1135

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2005

| Patent document cited in search report | | | Publication date | Patent family member(s) | | | Publication date |
|---|---|---|---|---|---|---|---|
| WO 9908425 | A | | 18-02-1999 | US | 6175590 | B1 | 16-01-2001 |
| | | | | AU | 8698698 | A | 01-03-1999 |
| | | | | CN | 1266577 | A | 13-09-2000 |
| | | | | EP | 1010305 | A1 | 21-06-2000 |
| | | | | JP | 2001513598 | T | 04-09-2001 |
| | | | | TW | 453081 | B | 01-09-2001 |
| | | | | WO | 9908425 | A1 | 18-02-1999 |
| | | | | ZA | 9807149 | A | 09-02-1999 |
| WO 9953628 | A | | 21-10-1999 | FI | 980703 | A | 28-09-1999 |
| | | | | AU | 756100 | B2 | 02-01-2003 |
| | | | | AU | 3148899 | A | 01-11-1999 |
| | | | | CN | 1302485 | A | 04-07-2001 |
| | | | | EP | 0997009 | A2 | 03-05-2000 |
| | | | | WO | 9953628 | A2 | 21-10-1999 |
| | | | | JP | 2002508147 | T | 12-03-2002 |
| | | | | NO | 995801 | A | 26-11-1999 |
| | | | | US | 6269126 | B1 | 31-07-2001 |
| | | | | US | RE38539 | E1 | 22-06-2004 |
| EP 1227596 | A | | 31-07-2002 | EP | 1241796 | A2 | 18-09-2002 |
| | | | | EP | 1227596 | A2 | 31-07-2002 |
| | | | | CN | 1273713 | A ,C | 15-11-2000 |
| | | | | DE | 69908293 | D1 | 03-07-2003 |
| | | | | DE | 69908293 | T2 | 25-03-2004 |
| | | | | DE | 69916903 | D1 | 03-06-2004 |
| | | | | DE | 69922707 | D1 | 20-01-2005 |
| | | | | WO | 0003486 | A1 | 20-01-2000 |
| | | | | EP | 1044508 | A1 | 18-10-2000 |
| | | | | JP | 2002520938 | T | 09-07-2002 |
| | | | | TW | 451560 | B | 21-08-2001 |
| | | | | US | 6671851 | B1 | 30-12-2003 |
| | | | | US | 2004093546 | A1 | 13-05-2004 |
| | | | | US | 2004073863 | A1 | 15-04-2004 |
| | | | | US | 2004073864 | A1 | 15-04-2004 |
| | | | | US | 2004073865 | A1 | 15-04-2004 |

EPO FORM P0459

For more details about this annex : see Official Journal of the European Patent Office, No. 12/82